# EUROPÄISCHE PATENTSCHRIFT

(11) **EP 1 216 613 B1**
(45) Veröffentlichungstag und Bekanntmachung des Hinweises auf die Patenterteilung: **24.03.2004**
(21) Anmeldenummer: 00811189.0
(22) Anmeldetag: 14.12.2000
(51) Int. Cl.: A01K 15/02

(54) **Freilaufführungsanlage**
Device for walking horses
Installation à promener des chevaux

(43) Veröffentlichungstag der Anmeldung: 26.06.2002
(73) Patentinhaber: Haring, Theo, 79802 Dettighofen (DE)
(72) Erfinder: Haring, Theo, 79802 Dettighofen (DE)
(74) Vertreter: Patentanwälte Feldmann & Partner AG

(56) Entgegenhaltungen:
- DE-A- 2 852 777
- DE-C- 19 746 562

## Beschreibung

Die Erfindung betrifft eine Freilaufführungsanlage zum Trainieren von Pferden auf einer kreisförmigen Longierbahn gemäss dem Oberbegriff des unabhängigen Patentanspruches.

Auf dem Markt sind Freilaufführungsanlagen zum Trainieren von Pferden erhältlich, welche auf offenem Feld oder in einer Art Halle, überdacht, montiert werden. Sie besteht aus einer kreisförmigen Longierbahn, welche auch als Hufschlag bezeichnet wird. Statt an einer Longe vom Mensch geführt, werden Pferde durch eine Vorrichtung auf dieser Longierbahn geführt. Diese Vorrichtung besteht wie ein Karussell aus einem Drehstern, welcher radial von einem Drehzentrum nach aussen ragende Tragarme aufweist. An jedem Tragarm hängt an seinem radial äusseren Bereich ein Führungsgitter nach unten. Jedes Führungsgitter ist mit Gummilamellen versehen, welche an seinem unteren Rand befestigt sind und frei herabhängen. Der Drehstern besteht aus einer stabilen Tragkonstruktion an Metall, welche zentral an einer Säule drehbar gelagert ist. Die Säule kann stehend am und im Untergrund befestigt sein oder in einer Halle, insbesondere einer Rundhalle, zentral an der Dachkonstruktion aufgehängt sein. Der Drehstern weist einen zentralen Antriebsring konzentrisch zur drehbaren Lagerung auf. Dieser Antriebsring wird von einem Elektromotor mittels Reibungskupplung, also mittels einem Reibrad angetrieben. Die Elektromotoren sind in Geschwindigkeit und Drehrichtung steuerbar. Damit wird der ganze Drehstern angetrieben, beschleunigt, gebremst und auch die Drehrichtung gewechselt. Die Pferde müssen in einem Pferdeführungsbereich zwischen je zwei benachbarten Führungsgittern auf der Longierbahn nach gegebener Geschwindigkeit rundum laufen. Die Longierbahn ist so breit, dass die Pferde sich umdrehen können, wenn die Drehrichtung der Vorrichtung gewechselt wird. Die Führungsgitter können elektrisch geladen werden, damit die Pferde nicht in Versuchung kommen, die ganze Anlage durch Körpereinsatz abzubremsen. Diese Anlagen weisen ein sehr grosses Gewicht auf, damit die sternförmige Konstruktion stabil genug ist. Diese sternförmige Konstruktion gleicht grundsätzlich der Konstruktion eines Karussells oder eines riesig überdimensionierten Sonnenschirmes. Daher können nachträglich auch keine zusätzlichen Führungsgitter angebracht werden, um eine grössere Anzahl Pferdeführungsbereiche zu erhalten. Da der Antrieb über den inneren konzentrischen Ring geschieht, ist die Umfangsgeschwindigkeit am Antrieb sehr langsam und wegen den grossen Hebelarmen der Tragarme am äusseren Umfang und damit im Bereich der Führungsgitter und der Longierbahn viel grösser. Dies erfordert eine sehr exakte Steuerung und ein stark dimensionierter Elektromotor, und eine entsprechende Belastung der Reibungskupplung. Die ganze drehbare Lagerung muss ebenfalls dem grossen Gewicht und den grossen Momenten stand halten, was die Gesamtkonstruktion wieder aufwendiger und schwerer macht. Dadurch entstehen wiederum Trägheitsmomente insbesondere beim Beschleunigen und Verzögern, welche ebenfalls wieder die gesamte Konstruktion belasten. Eine derartige Freilaufführungsanlage ist auch aus DE 28 52 777 A1 bekannt.

DE 19746562 zeigt eine andere Ausführung einer Freilaufführungsanlage zum Trainieren von Pferden mit einer kreisförmigen Longierbahn 1. Diese ist innenseitig und aussenseitig mit je einem Zaun oder einer Wand begrenzt und mit einer Konstruktion mit Trägern zum Tragen eines Daches überdacht. Im Bereich der Longierbahn ist an einem Träger eine Tragkonstruktion herabhängend angeordnet. Am unteren Ende der Tragkonstruktion sind beidseitig je ein Stützrad angebracht. Die Stützräder stehen im Winkel zueinander und greifen von schräg unten an einem umlaufenden Profilring an. Die Stützräder können somit wegen ihrer Anordnung sowohl Führungsfunktion als auch Tragfunktion für den umlaufenden Profilring übernehmen. Ein Antriebsmotor wirkt über ein Antriebsrad auf den Profilring und treibt diesen an. Am Profilring sind in regelmässigen Abständen Führungsgitter hängend angebracht. Dieses neuartige System zeitigte erhebliche dynamische Probleme auf, welche durch die Grösse und die Masse des Profilringes entstehen. Diese äussern sich im Erzeugen von Lärm, Erschütterungen und unregelmässigem Lauf der Freilaufführungsanlage.

Aufgabe der Erfindung ist es, eine Freilaufführanlage der zweit genannten Art zum Trainieren von Pferden anzugeben, welche die genannten Nachteile nicht aufweist. Sie soll die auftretenden dynamischen Probleme beheben oder mindestens weitgehend vermeiden helfen. Lärmverhältnisse, Erschütterungen und unregelmässiger Lauf sollen verbessert werden.

Diese Aufgabe wird durch die in den Patentansprüchen angegebene Erfindung gelöst.

Die erfindungsgemässe Freilaufführanlage wird nachstehend im Zusammenhang mit den Zeichnungen beschrieben. Es zeigen:
- Figur 1: schematische Anordnung von oben gesehen;
- Figur 2: einer erste Variante der erfindungsgemässen Aufhängung, Führung, Antrieb und Führungsgitter in Ansicht;
- Figur 3: Aufhängung, Führung, Antrieb und Führungsgitter in Ansicht in einer weiteren Ausführungsform mit Antrieb.
- Figur 4: Aufhängung, Führung, Antrieb und Führungsgitter in Ansicht in einer weiteren Ausführungsform ohne Antrieb.
- Figur 5: Aufhängung, Führung, Antrieb und Führungsgitter in Ansicht in einer weiteren Ausführungsform ohne Antrieb.

Die neue Freilaufpferdeführung hat an Stelle einer sternförmigen drehbaren Karussellkonstruktion, als motorisch antreibbare Pferdeführung, ein leichter, nur im Bereich der Longierbahn umlaufender, einen Vollkreis bildender, Profilring die Führungsgitter trägt und rundum bewegt wird. Der Profilring wird dabei durch Stütz- und Führungsrollen getragen und geführt und auch zur umlaufenden Bewegung angetrieben. Damit kann der Antrieb für die Umlaufbewegung der Führungsgitter ebenfalls im Bereich der Longierbahn selbst angeordnet werden, was die Geschwindigkeitsregulierung, und Vorwärts- Rückwärts- Umschaltung der Umfangsgeschwindigkeit ganz wesentlich verbessert, da keine grossen Hebelarme zwischen Antrieb und angetriebenen Führungsgittern vorhanden sind. Zu trainierende Pferde können die Anlage nicht mehr so einfach zum Stehen bringen. Zusätzlich wird die ganze Konstruktion entscheidend leichter, was sich auch auf die Konstruktion eines Hallendaches auswirkt. Ein entscheidender Vorteil besteht auch noch darin, dass jederzeit zusätzliche Führungsgitter montiert oder auch weggenommen werden können um die Anzahl der Pferdeführungsbereiche zu ändern. Dazu muss keine Aenderung am Aufbau durchgeführt werden. Statt einem sehr einfachen und genügenden Reibradantrieb können natürlich auch andere bekannte Antriebe verwendet werden.

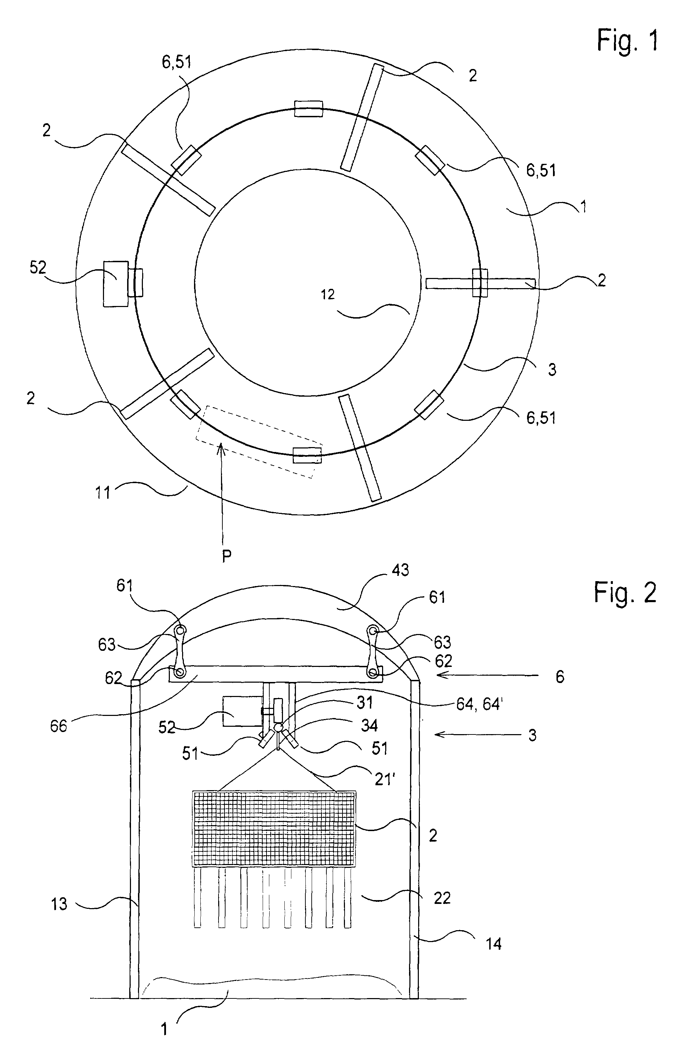

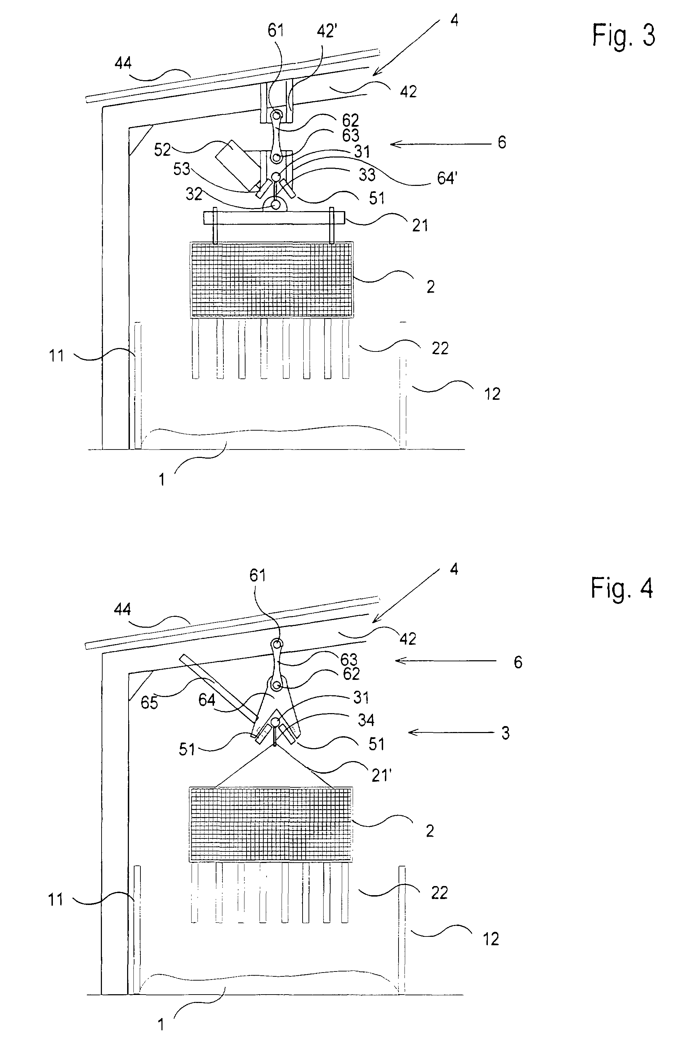

In der Figur 1 ist eine Ansicht von oben auf den umlaufende Profilring 3 mit einer Anzahl Führungsgittern 2 dargestellt. Der umlaufende Profilring 3 bildet einen Vollkreis, welcher sich im Bereich der kreisförmigen Longierbahn 1 befindet. Der Vollkreis des umlaufenden Profils 3 ist im dargestellten Beispiel so gewählt, dass es sich etwa in der Mitte der Longierbahn 1 über dieser befindet. Auf diese Art kann die Aufhängung der Führungsgitter 2 am einfachsten und kostengünstigsten ausgeführt werden. Aus dieser Figur 3 ist gut ersichtlich, dass die Aufhängung 6 über den Umfang des Vollkreises des Profilringes 3 annähernd regelmässig verteilt sind. Dies garantiert, dass der Profilring 3 auf den Stützrädern 51, gleichmässig geführt und getragen, problemlos rundum laufen kann. In regelmässigen Abständen.über den Umfang verteilt sind eine Anzahl Führungsgitter 2 am Profilring 3 nach unten hängend angeordnet. Zwischen je zwei benachbarten Führungsgittern befindet sich ein Pferdeführungsbereich für ein Pferd P. An einer der Aufhängungen 6 befindet sich eine Antriebsrolle 53 zum Antrieb des Profilringes 3. Sie ist mit dem Antriebsmotor 52 wirkverbunden.

In den Figuren 2 bis 5 sind Ansichten von Aufhängung, Führung, Antrieb und Führungsgitter dargestellt. Eine kreisförmige Longierbahn 1 ist innenseitig und aussenseitig mit je einem Zaun 11,12 oder einer Wand begrenzt. Sie ist mit einer Konstruktion 4 mit Trägern 42 zum Tragen eines Daches 44 überdacht. Im Bereich der Longierbahn 1 ist an Trägern 42 eine Aufhängung 6 herabhängend angeordnet. Am unteren Ende der Aufhängung 6 ist beidseitig je ein Stützrad 51 angebracht. Die Stützräder 51 stehen im Winkel zueinander und greifen von schräg unten an einem umlaufenden Profilring 3 an. Dieser Profilring ist hier im Querschnitt gezeichnet. Die Stützräder 51 können somit wegen ihrer Anordnung sowohl Führungsfunktion als auch Tragfunktion für den umlaufende Profilring 3 übernehmen. Eines der Stützräder 51 ist bei der Figur 3 direkt mit einem Antriebsmotor 52, welcher ebenfalls an der Aufhängung 6 befestigt ist, antreibbar verbunden und dient als Antriebsrad 53 eines Reibradandtriebes. Um die Reibung der Reibungskupplung zwischen Antriebsrad und umlaufendem Profilring einwandfrei zu gewährleisten und gleichzeitig ein Rattern zu vermindern, kann eine lose laufende Gegendruckrolle dem Antriebsrad gegenüberliegend angeordnet sein. Eine andere Variante des Antriebes geschieht gemäss der Figur 2 über ein oben auf dem Profilring 3 aufliegendes Antriebsrad 53. Dies weist den Vorteil auf, dass mit diesem Antriebsrad 53 der Profilring 3 gegen die Stützräder 51, gegebenenfalls federunterstützt, gedrückt werden kann um die Reibung der Reibungskupplung zu erhöhten. Die Stützräder 51 wirken so als Gegendruckrollen. Ein weiterer Vorteil dieses Antriebes besteht darin, dass der Durchmesser des Antriebsrades 54 der Antrieb in bezug auf den Drehzahlbereich des Motores zusätzlich optimiert werden kann. Die Stützräder 51 können aus Metall, Kunststoff oder Hartgummi sein. Bei Verwendung von Stützrädern aus Metall kann eine schwingungsdämpfende Einlage oder Zwischenlage, wie sie beispielsweise von Skiliften her bekannt sind, lärmdämpfend wirken. In der in Figur 3 dargestellten Ausführungsform besteht der umlaufende Profilring 3 aus einem oberen Rundstab 31 und einem unteren Rundstab 32, welche miteinander mittels regelmässig angeordneten Stegen 33 fest verbunden sind. Der Profilring 3 kann natürlich auch ein T-oder doppel T- Profil sein. Gemäss der Figur 2 besteht der Profilring aus einem einzigen Rundstab 31, an welchem Laschen 34, zum befestigen der Führungsgitter 2, nach unten hängend angebracht sind. Man benötigt dann aber getrennte Stützräder für die Tragfunktion und die Führungsfunktion. Es sei denn, dass das Profil geneigte Flanken aufweist. Am unteren Rundstab 32 ist ein Führungsgitter 2 hängend befestigt. Diese Befestigung kann mittels Ketten 21' (Figur 2), oder einem Tragstab 21, (Figur 3), oder dergleichen ausgeführt sein. Unten am Führungsgitter sind Gummilamellen angeordnet, welche weiter nach unten hängen. Die Führungsgitter 2 können fest angeordnet oder frei hängend am Profilring 3 angebracht sein. Empfehlenswert ist eine elektrisch isolierte Befestigung, da das ganze Führungsgitter dann einfach mit einem Viehhüter elektrisch geladen werden kann.

Falls eine freistehende Anlage ohne Ueberdachung erstellt werden soll, so wird die Tragkonstruktion 4 entsprechend leichter, da kein Dach getragen werden muss. Es genügen dann winkelförmige oder gebogene Träger43, welche mit einem oder zwei Stützen 13, 14 innerhalb oder ausserhalb der Longierbahn am oder im Boden befestigt sind. Die Aufhängungen 6 ist dabei am gebogenen Träger 43 angeordnet. Eine solche Ausführung ist in der Figur 2 dargestellt

Die Aufhängungen 6 haben die Aufgabe, die Führungsräder 51 und allenfalls auch den Antriebsmotor 52 mit dem Antriebsrad 53 pendelnd aufzuhängen, damit Unregelmässigkeiten im Profilring 3 beim Lauf ausgeglichen werden. Bei einer einfachsten Ausführung gemäss Figur 4 sind die Laufräder 51 in einem Rahmenelement 64 angeordnet. Das Rahmenelement 64 weist eine Verlängerung nach oben auf. Im Abstand von den Laufrädern nach oben befindet sich eine erste Anlenkung 62. Das Rahmenelement 64 ist an der Anlenkung 62 schwenkbar mit einem Traghebel 63 verbunden. Mittels dem Traghebel 63 sind Laufräder 51 und Rahmenelement 64 mit dem Träger 42 verbunden. Diese Verbindung ist bevorzugterweise ebenfalls schwenkbar mit einer zweiten Anlenkung 61 ausgestaltet. Die erste und die zweite Anlenkung 62, 61 können aus einem Bolzen, welcher in einer Durchbohrung gelagert ist ausgeführt sein. Je nach Beanspruchung ist ein Einsatz von Kugellagern oder Gleitlagern geeignet, um Abnützungen klein zu halten. Ein Stossdämpfer 65 kann zwischen Rahmenelement 64, 64' (Figur 2) und dem Träger 42 vorhanden sein. Er verhindert und bremst übermässige Seitwärtsbewegungen des Profilringes 3 und verbessert das Schwinungsverhalten durch Dämpfung der Bewegung des Rahmenelementes 64, 64'.

Es ist offensichtlich, dass diese Aufhängung 6 im Zusammenhang mit dem Antriebsmotor 52 samt Antriebsrad 53 stärker ausgeführt sein sollten. Dazu wird das Rahmenelement 64 zur Aufnahme des Antriebes als Rahmenelement 64' geeignet ausgestaltet und stärker ausgeführt. Ebenso kann die Befestigung am Träger 42 mit einer entsprechenden Trägerverstärkung 42' ergänzt sein. Siehe Figur 3.

Bei einer Freilaufpferdeführung nach Figur 2 ist die Aufhängung 6 vorteilhafterweise mit zwei gleichartigen Traghebeln 63 ausgeführt. Sie befinden sich im Abstand voneinander und sind mittels einem Verbindungshebel 66 über die ersten Schwenklager 62 miteinander verbunden. Die Rahmenelemente 64, 64' sind dabei an diesem Hebel 66 befestigt. Der Vorteil dieser Ausführung besteht darin, dass die Träger 43 leichter Dimensioniert werden können, da die Kräfte näher bei den Stützen 13, 14 angeordnet sind. Auch hier kann ein Stossdämpfer das Laufverhalten verbessern.

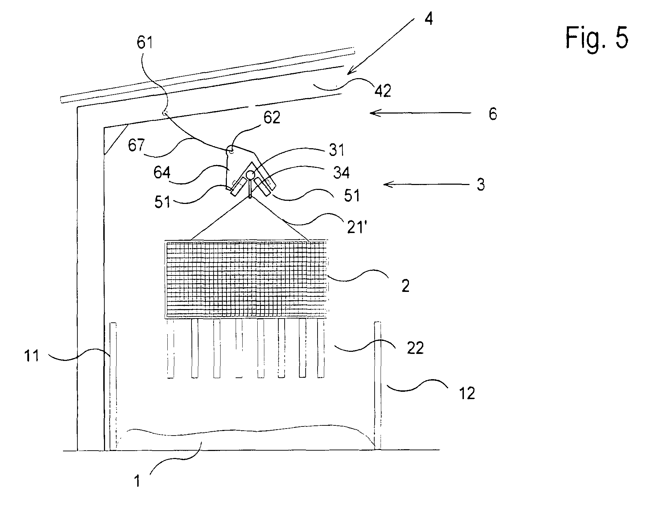

In der Figur 5 ist eine weitere Ausführungsform der Aufhängung 6 gezeigt. Im Gegensatz zur vorher beschriebenen Ausführung ist die Funktion des Traghebels 63 von einem Seilzug 67 übernommen. An den Anlenkungen 61 und 62 ist der Seilzug 67 am Träger 42 und am Rahmenelement 64 befestigt. Der Seilzug kann aus einem Stück Stahlseil Kette oder dergleichen sein. Das Rahmenelement 64 mit den Stützrädern 51 wird nun mit einer Diagonalabspannung nach aussen oben aufgehängt. Indem auf dem Umfang der Freilaufpferdeführung die Träger 42 in regelmässigen Abständen angeordnet sind, werden auch die Rahmenelemente 64 mit den Stützrädern 51 regelmässig verteilt angeordnet. Dadurch wird der Profilring 3 durch die Stützräder und die Rahmenelemente 64 mittels der Diagonalabspannung nach aussen und oben gezogen und dadurch selbst konzentrisch in gleichmässiger Höhe über der Longierbahn 1 gehalten. Unregelmässigkeiten im Profilring 3 und im Lauf des Profilringes 3 gleichen sich dadurch systemimmanent automatisch selbst aus. Das Aufhängesystem 6 dämpft dabei die Bewegungen ebenfalls selbständig. Das Rahmenelement für diese Art von Aufhängung 6 ist ebenfalls so ausgestaltet dass die Stützräder 51 sich ausgewogen in der richtigen Position befinden, um den Profilring 31 richtig stützen und führen zu können. Dazu kann die erste Anlenkung 62 am Rahmenelement 64 wie dargestellt aussermittig angeordnet sein.

Weitere Verbesserungen, besonders was den durch Rattern erzeugen Lärm anbelangt kann durch Einlage einer Schicht aus Gummi oder anderem elastischem Material in die Stützräder 51 erzielt werden. Dazu können auch auf Federelementen schwimmende Felgen als Laufflächen an den Stützrädern dienen.

## Patentansprüche

1. Freilaufführungsanlage, zum Trainieren von Pferden auf einer kreisförmigen Longierbahn (1), mit einer Anzahl, an einem motorisch antreibbaren Profilring (3) aufgehängten und im Bereich der kreisförmigen Longierbahn (1) umlaufenden Führungsgittern (2), welche je voneinander beabstandet sind , wobei der Zwischenraum zwischen je zwei benachbarten Führungsgittern (2) einen Pferdeführungsbereich bildet, **dadurch gekennzeichnet, dass** der Profilring (3) mittels einer Aufhängung (6), welche ein Rahmenelement (64) mit Stützrädern (51) für den Profilring (3) umfasst, an Trägern (42,43) über der kreisförmigen Longierbahn (1) beweglich gehalten ist.

2. Freilaufführungsanlage nach Anspruch 1,**dadurch gekennzeichnet, dass** das Rahmenelement (64) mittels einer ersten Anlenkung (62) mit dem Träger (42,43) schwenkbar verbunden ist.

3. Freilaufführungsanlage nach Anspruch 1, **dadurch gekennzeichnet, dass** das Rahmenelement (64) mittels einer zweiten Anlenkung (61) mit dem Träger (42,43) schwenkbar verbunden ist.

4. Freilaufführungsanlage nach Anspruch 1, **dadurch gekennzeichnet, dass** das Rahmenelement (64) einen Motor (52) und ein Antriebsrad (53) aufweist.

5. Freilaufführungsanlage nach Anspruch 1, **dadurch gekennzeichnet, dass** der Profilring (3) einen unter ihm angeordneten Rundstab (32) aufweist, an welchem die Führungsgitter befestigt sind.

6. Freilaufführungsanlage nach Anspruch 1, **dadurch gekennzeichnet, dass** die Aufhängung (6) einen Traghebel (63) umfasst, welcher an einer ersten Anlenkung (62) am Rahmenelement (64) und mit einer zweiten Anlenkung (61) am Träger (43) schwenkbar angeordnet ist.

7. Freilaufführungsanlage nach Anspruch 1, **dadurch gekennzeichnet, dass** die Aufhängung (6) zwei Traghebel (63) umfasst, welche mit ersten Anlenkungen (62) an einem Verbindungshebel (66) und mit zweiten Anlenkungen (61) am träger (43) schwenkbar angeordnet sind, wobei das Rahmenelement (64) am Verbindungshebel (66) befestigt ist.

8. Freilaufführungsanlage nach Anspruch 6 oder 7, **dadurch gekennzeichnet, dass** zwischen Rahmenelement (64) und Träger (42,43) ein Stossdämpfer (65) vorhanden ist.

9. Freilauffürungsanlage nach Anspruch 1, **dadurch gekennzeichnet, dass** die Aufhängung (6) einen Seilzug (67) umfasst, mittels welchem das Rahmenelement (64) zum Träger (42,43) gespannt ist.

10. Freilaufführung nach Anspruch 9, **dadurch gekennzeichnet, dass** die Aufhängungen (6) regelmässig am Umfang der Longierbahn (1 ) verteilt angeordnet sind, so dass die Seilzüge (67) eine Diagonalabspannung zum tragen und führen des Profilringes (3) bilden.

11. Freilaufführungsanlage nach einem der Ansprüche 1 bis 10, **dadurch gekennzeichnet, dass** die Stützräder (51) mit einer Schicht aus elastischem Material versehen sind.

12. Freilaufführungsanlage nach einem der Ansprüche 1 bis 10, **dadurch gekennzeichnet, dass** die Stützräder (51) auf Federelementen schwimmende Felgen aufweisen.

13. Freilaufführungsanlage nach Anspruch 4, **dadurch gekennzeichnet, dass** eine lose laufende Gegendruckrolle dem Antriebsrad (53) gegenüberliegend, den Profilring (3) gegen das Antriebsrad (53) drückend, angeordnet ist.

## Claims

1. A free movement guiding installation for training horses on a circular longeing path (1), with a number of guide gratings (2) which are suspended on a motorically drivable profile ring (3), revolve in the region of the circular longeing path (1) and are each distanced to one another, wherein the intermediate space between in each case two neighbouring guide gratings (2) forms a horse guiding region, wherein the profile ring (3) by way of a suspension (6) which comprises a frame element (64) with support wheels (51 ) for the profile ring (3) is movably held on supports (42,43) over the circular longeing (1) path.

2. A free movement guiding installation according to claim 1, wherein the frame element (64) is pivotably arranged by a first linkage (62) on the support (42,43).

3. A free movement guiding installation according to claim 1, wherein the frame element (64) is pivotably arranged by a second linkage (61) on the support (42,43).

4. A free movement guiding installation according to claim 1, wherein the frame element (64) comprises a motor (52) and a drive wheel (53).

5. A free movement guiding installation according to claim 4, wherein the profile ring (3) comprises a round rod (32) which is arranged below it and on which the guide gratings are fastened.

6. A free movement guiding installation according to claim 1, wherein the suspension (6) comprises a support lever (63) which is pivotably arranged at a first linkage (62) on the frame element (64) and at a second linkage (61) on the support (43).

7. A free movement guiding installation according to claim 1, wherein the suspension . (6) comprises two support levers (63) which with first linkages (62) are pivotably arranged on a connection lever (66) and with second linkages (61) are pivotably arranged on the support (43), wherein the frame element (64) is fastened to the connection lever (66).

8. A free movement guiding installation according to claim 6 or 7, wherein a shock absorber (65) is present between the frame element (64) and the support (42,43).

9. A free movement guiding installation according to claim 1, wherein the suspension (6) comprises a pull cable (67) by way of which the frame element (64) is tensioned to the support (42,43).

10. A free movement guiding installation according to claim 9, wherein the suspensions (6) are arranged regularly distributed on the circumference of the longeing (1) path so that the pull cables (67) form a diagonal bracing for supporting and guiding the profile ring (3).

11. A free movement guiding installation according to one of the claims 1 to 10, wherein the support wheels (51) are provided with a layer of elastic material.

12. A free movement guiding installation according to one of the claims 1 to 10, wherein the support wheels (51) have rims floating on spring elements.

13. A free movement guiding installation according to claim 4, wherein a loosely running counter-pressure roller is arranged lying opposite the drive wheel (53) and pressing the profile ring (3) against the drive wheel (53).

## Revendications

1. Installation de marche libre pour l'entraînement de chevaux sur une Piste circulaire (1) de conduite " la longe, avec un certain nombre de grilles de guidage (2), disposées tout autour dans la région de la piste circulaire (1) en étant suspendues (51) un profilé annulaire (3) pouvant être entraîné par moteur, grilles qui sont distantes les unes des autres, l'espace intermédiaire entre deux grilles de guidage voisines (2) formant chaque fois une zone pour na cheval " guider, **caractérisée en ce que** le profilé annulaire (3) est, au moyen d'une suspension (6) qui comprend un élément formant bâti (64) pourvu de roues de soutien (5 1) pour le profilé annulaire (3), fixé à des poutres porteuses (42, 43) en étant mobile au-dessus de la Piste circulaire (1).

2. Installation de manche libre selon la revendication 1, **caractérisée en ce que** l'élément formant bâti (64) est monté à pivotement par une deuxième articulation (62) sur la poutre porteuse (24,43)

3. Installation de manche libre selon la revendication 1, **caractérisée en ce que** l'élément formant bâti (64) est monté à pivotement par une deuxième articulation (61) sur la poutre porteuse (24,43)

4. Installation de manche libre selon la revendication 1, **caractérisée en ce que** l'élément formant bâti (64) présente na moteur (52) et une roue d'entraînement (53).

5. Installation de marche libre selon la revendication 4, **caractérisée en ce que** le profilé annulaire (3) présente une barre ronde (31) disposée en dessous d'elle, " laquelle sont fix6es les grilles de guidage.

6. Installation de marche libre selon la revendication 1, **caractérisée en ce que** la suspension (6) comprend un levier porteur (63) qui est monté à pivotement sur l'élément formant bâti (64) par une première articulation (62) et sur la poutre porteuse (43) par une deuxième articulation (61).

7. Installation de marche libre selon la revendication 1, **caractérisée en ce que** la suspension (6) comprend deux leviers porteurs (63), qui sont montés à pivotement sur un levier de liaison (66) par des premières articulations (62) et sur la poutre porteuse (43) par des deuxi6mes articulations (61), l'élément formant bâti (64) étant fixe au levier de liaison (66),

8. Installation de marche libre selon la revendication 6 ou 7, **caractérisée en ce qu'**un amortisseur (65) est présent entre l'élément formant bâti (64) et la poutre porteuse (42, 43).

9. Installation de manche libre selon la revendication 1, **caractérisée en ce que** la suspension (6) comprend un câble de traction (67), au moyen duquel l'élément formant bâti (64) est tendu vers la poutre porteuse (42, 43).

10. Installation de marche libre selon la revendication 9, caract6ris6e en ce que les suspensions (6) sont disposées en étant régulièrement réparties sur le pourtour de la Piste (1) de conduite à la longe, de sorte que les câbles de traction (67) forment un haubanage diagonal pour porter et guider le profilé annulaire (3).

11. Installation de marche libre selon l'une des revendications 1 à 10, **caractérisée en ce que** les roues de soutien (5 1) sont pourvues d'une couche de matériau élastique.

12. Installation de marche libre selon l'une des revendications 1 à 10, **caractérisée en ce que** les roues de soutien (5 1) présentent des jantes montées en montage flottant sur des éléments de ressort.

13. Installation de marche libre selon la revendication 4, **caractérisée en ce qu'**un galet de contre-pression librement rotatif est disposé en vis-à-vis de la roue d'entraînement (53), pressant le profilé annulaire (3) contre la roue d'entraînement (53).
